# EUROPEAN PATENT SPECIFICATION

(11) **EP 2 730 439 B1**
(45) Date of publication and mention of the grant of the patent: **21.02.2018**
(21) Application number: 12796330.4
(22) Date of filing: 06.06.2012
(51) Int. Cl.: B60H 1/32, B60K 11/04, B60K 11/02, F28D 1/04, F28F 9/26, B60K 1/00, B60H 1/00, F28D 21/00

(54) **WATER-COOLED CONDENSER**
WASSERGEKÜHLTER KONDENSATOR
CONDENSEUR REFROIDI PAR EAU

(30) Priority: 10.06.2011 JP 2011129915
(43) Date of publication of application: 14.05.2014
(73) Proprietor: Calsonic Kansei Corporation, Saitama-shi Saitama 331-8501 (JP)
(72) Inventor: MATSUDAIRA, Norimitsu, Saitama-shi Saitama 331-8501 (JP); MORI, Eiichi, Saitama-shi Saitama 331-8501 (JP)
(74) Representative: Grünecker Patent- und Rechtsanwälte PartG mbB
(86) International application number: PCT/JP2012/064502
(87) International publication number: WO 2012/169504

(56) References cited:
- EP-A1- 1 216 872
- EP-A1- 2 051 037
- WO-A1-2010/061808
- DE-A1- 4 437 083
- FR-A1- 2 930 223
- JP-A- 9 076 734
- JP-A- 10 332 227
- JP-A- 2004 270 999
- JP-A- 2005 343 221
- JP-A- 2005 343 221
- JP-A- 2010 173 357
- US-A1- 2011 114 286

## Description

### TECHNICAL FIELD

The present invention relates to a water-cooled condenser, especially to a water-cooled condenser suitable for exchanging heat of refrigerant of an air-conditioner for a vehicle.

### BACKGROUND ART

A Patent Document 1 and a Patent Document 2 listed below disclose a water-cooled condenser installed within a side tank of a sub-radiator. In addition, a Patent Document 3 listed below discloses an air-cooled condenser and a radiator arranged lower than a bumper reinforcement.

### Prior Art Document

### Patent Documents

Patent Document 1: Japanese Patent Application Laid-Open No. 2010-121604
Patent Document 2: Japanese Patent Application Laid-Open No. 2010-127508
Patent Document 3: Japanese Patent Application Laid-Open No. 2005-22474

### SUMMARY OF INVENTION

In the configurations disclosed in the Patent Document 1 and the Patent Document 2, a bumper reinforcement is disposed at a front section of a vehicle for collision safety. Since front surfaces of the condenser and the sub-radiator are covered by the bumper reinforcement, cooling airflow volume reduces and thereby heat radiation performance reduces. In addition, a size of the sub-radiator becomes large due to the built-in water-cooled condenser in the side tank of the sub-radiator, so that designing of layout is restricted in a case of a vehicle whose front section has a relatively narrow space. In addition, a pipe(s) is protruded forward from the water-cooled condenser, so that arrangement of the bumper reinforcement in a front section of a vehicle becomes difficult and refrigerant leakage from the refrigerant pipe(s) protruded forward 'is apprehended in a slight collision to a front, section of a vehicle.
The document EP 2 051037 A1 discloses a vehicle according to the preamble of claim 1.

In the configuration disclosed in the Patent Document 3, since the air-cooled condenser and the radiator are arranged lower than the bumper reinforcement, heat radiation performance is good due to a sufficient cooling airflow volume. However, installation of a water-cooled condenser is not considered in the configuration.

An object of the present invention is to provide a water-cooled condenser that can improve heat radiation performance and can be adapted to arrangement of a bumper reinforcement at a front section of a vehicles.

This object is solved by the features of claim 1. Further improvements are laid down in the sub-claims.
An aspect of the present invention provides a water-cooled condenser that exchanges heat between refrigerant of an air conditioner for a vehicle and coolant, and then send the refrigerant out to a air-cooled condenser through a refrigerant outlet port, wherein the refrigerant outlet port is connected with the air-cooled condenser at a position that doesn' t overlap a bumper reinforcement arranged in front of the air-cooled, condenser at a front section of the vehicle when viewed along an airflow direction toward the air-cooled condenser.

According to the aspect, since the refrigerant outlet port of the water-cooled condenser is connected with the air-cooled condenser at the position that doesn't overlap the bumper reinforcement, the refrigerant that flows into the air-cooled condenser through the refrigerant outlet port flows much at the position that doesn't overlap the bumper reinforcement and thereby superior heat radiation performance can be brought by a sufficient cooling airflow volume. Therefore, total heat radiation performance achieved by the air-cooled condenser and the water-cooled condenser can be improved and the water-cooled condenser can be adapted to arrangement of the bumper reinforcement at the front section of the vehicle.

Here, it is preferable that the refrigerant outlet port is disposed above or beneath the bumper reinforcement. Namely, the refrigerant outlet port is shifted vertically so as not to overlap the bumper reinforcement, and a position with a small refrigerant flow rate right next to the above-mentioned position where the refrigerant flows much overlaps the bumper reinforcement. As a result, affection by reduction of a cooling airflow volume can be restricted to a minimum to improve total heat radiation performance.

In addition, it is preferable that a sub-radiator for exchanging heat between the coolant and outside air is provided above or under the air-cooled condenser, and the bumper reinforcement is disposed so as to overlap a portion of the air-cooled condenser and a portion of the sub-radiator. According to this, affection by reduction of a cooling airflow volume can be dispensed to the air-cooled condenser and the sub-radiator, and a refrigerant pipe between the water-cooled condenser and the air-cooled condenser and a coolant pipe between the water-cooled condenser and the sub-radiator can be shortened.

Here, it is preferable that a coolant inlet port to the sub-radiator is disposed at a position that doesn't overlap the bumper reinforcement when viewed along the airflow direction. According to this, the coolant that flows into the sub-radiator through the coolant inlet port flows much at the position that doesn't overlap the bumper reinforcement and thereby superior heat radiation performance can be brought by a sufficient cooling airflow volume. As a result, temperature of the coolant used for the water-cooled condenser is reduced to improve total heat radiation performance achieved by the air-cooled condenser and the water-cooled condenser.

In addition, it is preferable that the water-cooled condenser is disposed on one side of the sub-radiator and the air-cooled condenser, and a liquid tank for accumulating part of the refrigerant is disposed on another side of the air-cooled condenser. According to this, the water-cooled condenser or the liquid tank can be prevented from contacting with the bumper reinforcement in a slight collision of a vehicle, and thereby refrigerant leakage can be prevented.

### BRIEF DESCRIPTION OF DRAWINGS

**[****Fig. 1****]** It is a front view of a combined heat exchanger including a water-cooled condenser according to a first embodiment.
**[****Fig. 2****]** It is a front view showing positions of a refrigerant inlet port and a refrigerant outlet port in the water-cooled condenser when measuring refrigerant flow rate.
**[****Fig. 3****]** It is a chart showing measured results of refrigerant flow rate.
**[****Fig. 4****]** It is a front view showing a modified example of a coolant flow passage in the first embodiment.
**[****Fig. 5****]** It is a front view of a combined heat exchanger including a water-cooled condenser according to a second embodiment.
**[****Fig. 6****]** It is a front view showing a modified example of a coolant flow passage in the second embodiment.

### DESCRIPTION OF EMBODIMENTS

Hereinafter, a combined heat exchanger including a water-cooled condenser according to an embodiment(s) will be explained with reference to the drawings.

### (First Embodiment)

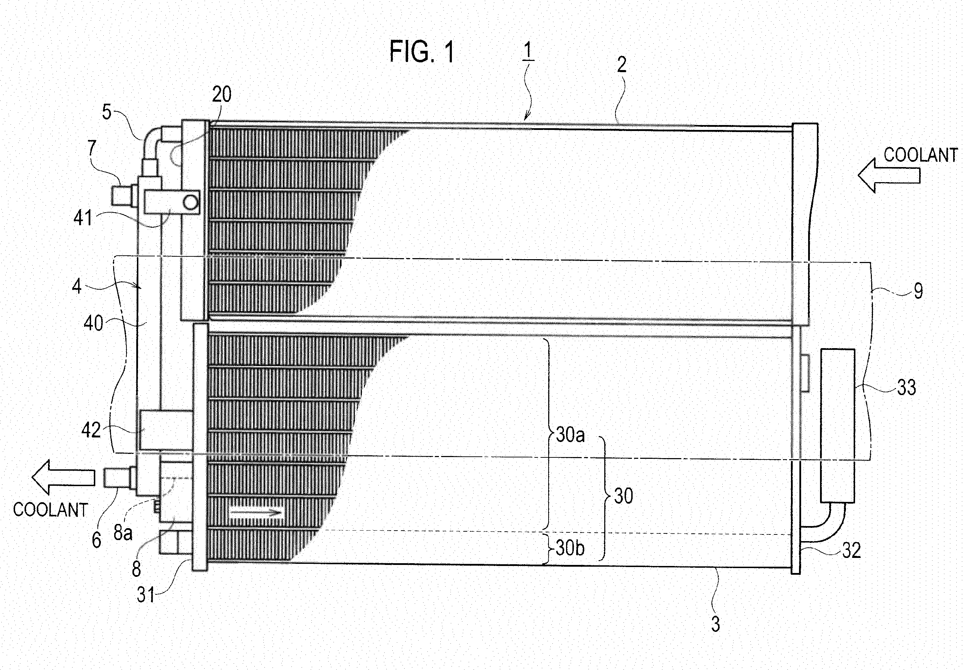

As shown in Fig. 1, the combined heat exchanger 1 includes a sub-radiator 2, an air-cooled condenser 3 outside a passenger compartment, and a water-cooled condenser 4. The sub-radiator 2 exchanges heat between coolant for cooling a heat-generating object (e.g. an inverter when a vehicle is an EV or an HEV) and outside air (to reduce temperature of the coolant). The air-cooled condenser 3 is disposed under the sub-radiator 2, and exchanges heat between refrigerant for air-conditioning and outside air (to reduce temperature of the refrigerant). The water-cooled condenser 4 is disposed beside (on a left side in Fig. 1) the sub-radiator 2 and the air-cooled condenser 3. A bumper reinforcement 9 for collision safety is disposed in front of the sub-radiator 2, the air-cooled condenser 3, and the water-cooled condenser 4.

The air-cooled condenser 3 includes a core 30, and a pair of a first rank 31 and a second tank 32. In the core 30, tubes and heat-radiation fins are vertically stacked alternately. The first tank 31 and the second tank 32 are attached to side ends of the core 30, respectively, and are communicated with the tubes. The air-cooled condenser 3 is a subcoolinq-type condenser, and the core 30 is divided into a condensing section 30a on its upper side and a subcooling section 30b on its lower side. Each inside of the first tank 31 and the second tank 32 is also partitioned into upper and lower sections in accordance with the condensing section 30a and the subcooling section 30b.

The refrigerant flows into the air-cooled condenser 3 from an upper portion of the first tank 31. The refrigerant flows through the condensing section 30a rightward in Fig. 1, and then flows downward in the upper section of the second tank 32, and flows into the lower section of the second tank 32 via a liquid tank 33 connected with the second tank 32. The refrigerant flows into the subcooling section 30b from the lower section of the second tank 32. The refrigerant flows through the subcooling section 30b leftward in Fig. 1, and then flows out from the air-cooled condenser 3 via the lower section of the first tank 31. Note that the liquid tank 33 may be a gas-liquid separator for separating refrigerant liquid and refrigerant gas, or a modulator provided in a subcooling-type condenser.

The water-cooled condenser 4 in the present embodiment is connected with the sub-radiator 2 and the air-cooled condenser 3. A flow passage for the coolant and a flow passage for the refrigerant are separated with each other in the inside of the water-cooled condenser 4 and the coolant and the refrigerant are not mingled, but heat is exchanged between the coolant and the refrigerant (the refrigerant is cooled by the coolant).

The coolant that flows out from the sub-radiator 2 flows into an upper portion of the water-cooled condenser 4 through a flexible coolant flow-in pipe 5 disposed at an upper end of the water-cooled condenser 4. The coolant flows downward in an inner flow passage of the water-cooled condenser 4, and then flows out from a lower portion of the water-cooled condenser 4 through a coolant flow-out pipe 6 disposed at the lower portion of the water-cooled condenser 4 to return to the inverter.

On the other hand, the refrigerant flows into the water-cooled condenser 4 through a refrigerant flow-in pipe 7 . The refrigerant flows downward in an inner flow passage of the water-cooled condenser 4, and then flows into the air-cooled condenser 3 through an intermediate connecting member 8 within which a refrigerant outlet port 8a is formed. The intermediate connecting member 8 is connected with the first tank 31 of the air-cooled condenser 3 slightly beneath (closely beneath) (an lower edge of) the bumper reinforcement 9.

In addition, the water-cooled condenser 4 includes a casing 40 extended vertically. A heat exchanging portion (refrigerant flow passage) where heat is exchanged between the refrigerant and the coolant and a tank (coolant flow passage) formed between the heat exchanging portion and the casing 40 for accumulating the coolant are provided within the casing 40.

The water-cooled condenser 4 is disposed independently beside the sub-radiator 2 and the air-cooled condenser 3 (lateral to the sub-radiator 2 and the air-cooled condenser 3 in parallel to the bumper reinforcement 9). The lower portion of the water-cooled condenser 4 is attached to a sidewall of the first tank 31 of the air-cooled condenser 3 via the intermediate connecting member 8, and fixed with the first tank 31 of the air-cooled condenser 3 by a bracket 42. On the other hand, the upper portion of the water-cooled condenser 4 is fixed with the sub-radiator 2 via a bracket 41. In addition, the upper end of the water-cooled condenser 4 is connected with a sidewall 20 of the sub-radiator 2 via the flexible coolant flow-in pipe 5.

According to the water-cooled condenser 4 in the present embodiment, the intermediate connecting member 8 (refrigerant outlet port 8a) is connected with the air-cooled condenser 3 slightly beneath (the lower edge of) the bumper reinforcement 9, i.e. at a position that doesn't overlap the bumper reinforcement 9 (a position shifted vertically so as not to overlap when viewed from a front of the vehicle: a position that doesn't overlap when viewed along a direction of airflow toward the air-cooled condenser 3). Since the refrigerant flows into the air-cooled condenser 3 through the refrigerant outlet port 8a, the refrigerant flows much in the tube(s) at a level of the above-explained connection position. Therefore, since the connection position is located slightly beneath the bumper reinforcement 9, a cooling airflow volume is large and thereby heat radiation performance doesn't reduce. As a result, total heat radiation performance achieved by the air-cooled condenser 3 and the water-cooled condenser 4 is improved, and the water-cooled condenser 4 according to the present embodiment can be adapted to arrangement of the bumper reinforcement 9 at a front section of a vehicle.

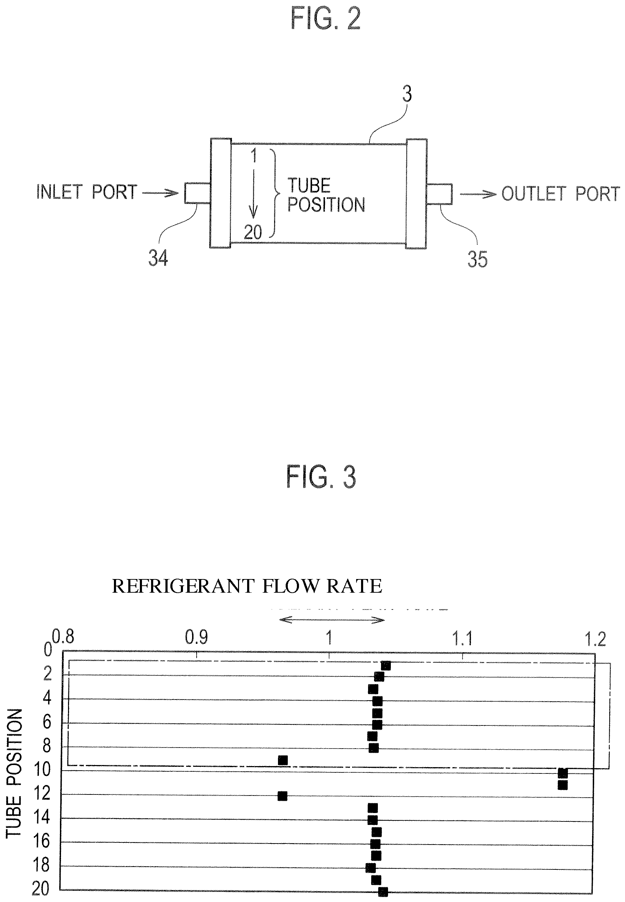

Note that, as shown in Fig. 2, distribution of refrigerant flow rate in the air-cooled condenser 3, in a case where an inlet port 34 and an outlet port 35 of the refrigerant are located at a vertical middle position of the air-cooled condenser 3, is shown in [Table 1] shown below. Namely, when an uppermost tube position is denoted as "1" and a lowermost tube position is denoted as "20", the inlet port 34 and the outlet port 35 are located at tube positions "10, 11". Then, the refrigerant flow rate is highest at the positions "10, 11", and the refrigerant flow rate is lowest at positions "9, 12" right next to them.

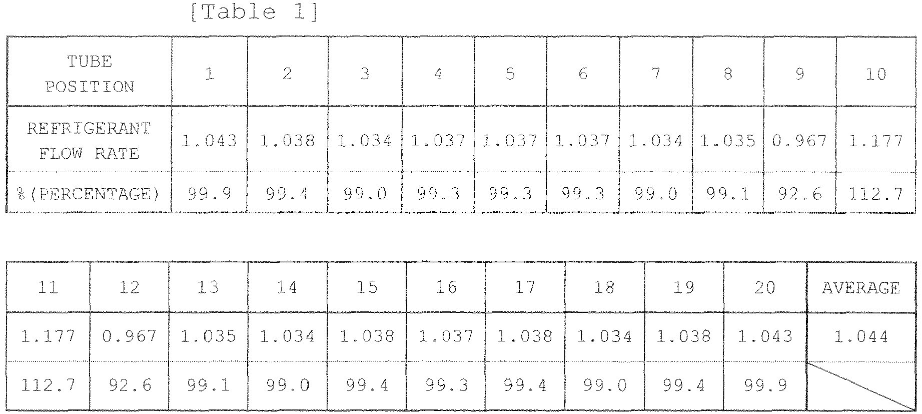

Since the refrigerant flow rate and the heat radiation amount are proportional, the tubes at the positions "10, 11" of the air-cooled condenser 3 are set slightly beneath the bumper reinforcement 9 (shown by a rectangular indicated by dashed-dotted lines in Fig. 3), and the tube at the position "9" is located so as to overlap the bumper reinforce 9. According to this, the tubes located at the positions "10, 11" with the high refrigerant flow rate can radiate heat sufficiently with no affection by the bumper reinforcement 9. The tube at the position "9" may be affected by the bumper reinforcement 9, but its refrigerant flow rate is low and thereby the total heat radiation performance is hardly affected. As a result, the total heat radiation performance achieved by the air-cooled condenser 3 and the water-cooled condenser 4 is improved and the water-cooled condenser 4 can be adapted to arrangement of the bumper reinforcement 9 at a front section of a vehicle.

In addition, since the water-cooled condenser 4 according to the present embodiment is not installed within the side tank of the sub-radiator 2 but provided independently beside the sub-radiator 2, the sub-radiator 2 can be downsized. As a result, the combined heat exchanger 1 can be disposed even in a vehicle whose front section has a relatively narrow space, and the water-cooled condenser 4 according to the present embodiment is superior in view of designing of layout.

In addition, according to the water-cooled condenser 4 in the present embodiment, the coolant flow-in pipe 5 and the coolant flow-out pipe 6 are protruded laterally (in a width direction of a vehicle), and not protruded forward (toward the bumper reinforcement 9). Therefore, it is easy to arrange the bumper reinforcement 9 at a front section of a vehicle, and the water-cooled condenser 4 according to the present embodiment is superior in view of designing of layout. Further, since the refrigerant pipes are not also protruded forward, it is easy to arrange the bumper reinforcement 9 at a front section of a vehicle in view of this point and refrigerant leakage from the refrigerant pipes can be prevented in a slight collision to a front section of a vehicle.

In addition, the sub-radiator 2 and the air-cooled condenser 3 are coupled by the water-cooled condenser 4 in the present embodiment, and thereby the water-cooled condenser 4 functions as a connection bracket. Therefore, a dedicated bracket for coupling the sub-radiator 2 and the air-cooled condenser 3 is not required, so that the number of parts can be reduced.

In addition, the water-cooled condenser 4 in the present embodiment is connected with the sub-radiator 2 via the flexible coolant flow-in pipe 5. Therefore, deviations of an assembling position between the sub-radiator 2 and the water-cooled condenser 4 can be settled by the flexibility of the coolant flow-in pipe 5, so that assembling works can be done smoothly.

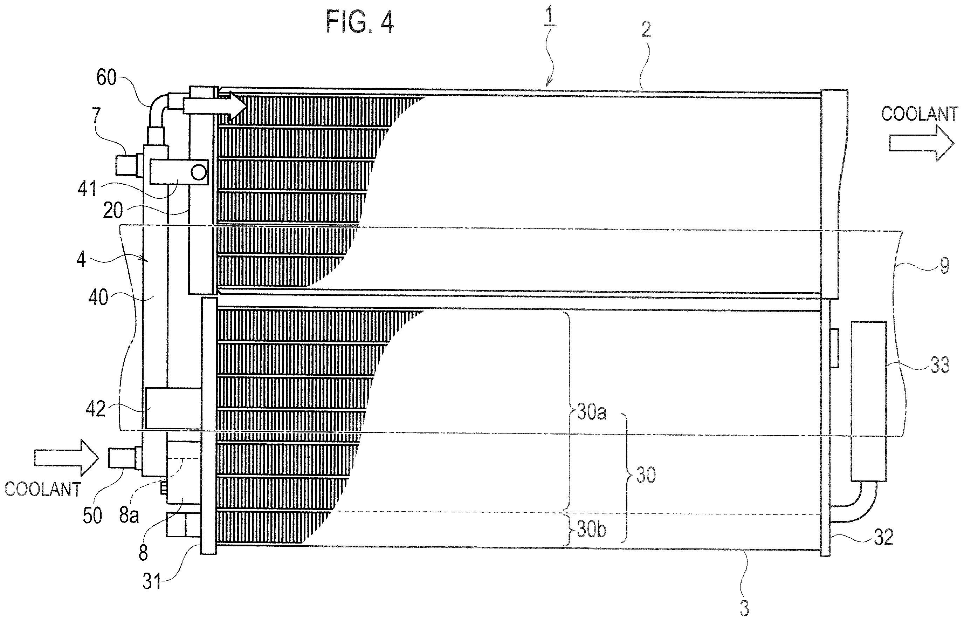

Note that, in the present embodiment, the coolant flows into the water-cooled condenser 4 from its upper end through the coolant flow-in pipe 5, and flows out from the lower portion of the water-cooled condenser 4 through the coolant flow-out pipe 6. However, a flow of the coolant is not limited to this, a flow of the coolant may be set reversely. Namely, as shown in Fig. 4, the coolant may flow into the lower portion of the water-cooled condenser 4 through a coolant flow-in pipe 50 provided at the lower portion of the water-cooled condenser 4, and may flow out from the upper end of the water-cooled condenser 4 via a flexible coolant flow-out pipe 60 provided at the upper end of the water-cooled condenser 4. But, the configuration shown in Fig. 1 is preferred, because the coolant after being cooled by the sub-radiator 2 flows into the water-cooled condenser 4.

### (Second Embodiment)

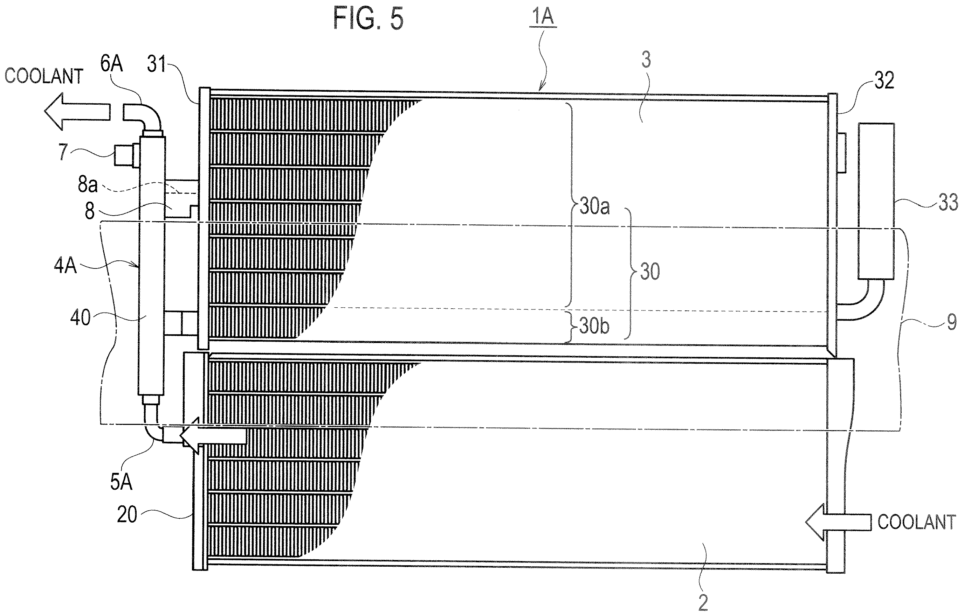

As shown in Fig. 5, in a water-cooled condenser 4A according to the present embodiment, the intermediate connecting member 8 (refrigerant outlet port 8a) is connected with the first tank 31 of the air-cooled condenser 3 slightly above (closely above) (an upper edge of) the bumper reinforcement 9. The air-cooled condenser 3 is disposed above the sub-radiator 2, and the water-cooled condenser 4A is disposed beside (on a left side in Fig. 5) the sub-radiator 2 and the air-cooled condenser 3. Note that, in the present embodiment, components identical or equivalent to those in the first embodiment are labeled by the identical numbers.

The coolant, that has flown out from the sub-radiator 2 flows into the water-cooled condenser 4A through a flexible coolant flow-in pipe 5A disposed at a lower end of the water-cooled condenser 4A. The coolant flows upward in an inner flow passage of the water-cooled condenser 4A, and then flows out from an upper portion of the water-cooled condenser 4A through a coolant flow-out pipe 6A disposed at an upper end of the water-cooled condenser 4A to return to the inverter.

On the other hand, the refrigerant flows into the water-cooled condenser 4A through the refrigerant flow-in pipe 7. The refrigerant exchanges heat with the coolant while flowing downward in an inner flow passage of the water-cooled condenser 4A, and then flows into the air-cooled condenser 3 through the intermediate connecting member 8 within which the refrigerant outlet port 8a is formed.

In the present, embodiment, the intermediate connecting member 8 (refrigerant outlet port 8a) is connected with the air-cooled condenser 3 slightly above (the upper edge of) the bumper reinforcement 9, i.e. at a position that doesn't overlap the bumper reinforcement 9 (a position vertically shifted so as not to overlap when viewed from a front of the vehicle: a position that doesn't overlap when viewed along a direction of airflow toward the air-cooled condenser 3) . Since the refrigerant flows into the air-cooled condenser 3 through the refrigerant outlet port 8a, the refrigerant flows much in the tube (s) at a level of the above-explained connection position. Therefore, since the connection position is located slightly above the bumper reinforcement 9, a cooling airflow volume is large and thereby heat radiation performance doesn't reduce. As a result, total heat radiation performance achieved by the air-cooled condenser 3 and the water-cooled condenser 4A is improved, and the water-cooled condenser 4A according to the present embodiment can be adapted to arrangement of the bumper reinforcement 9 at a front section of a vehicle.

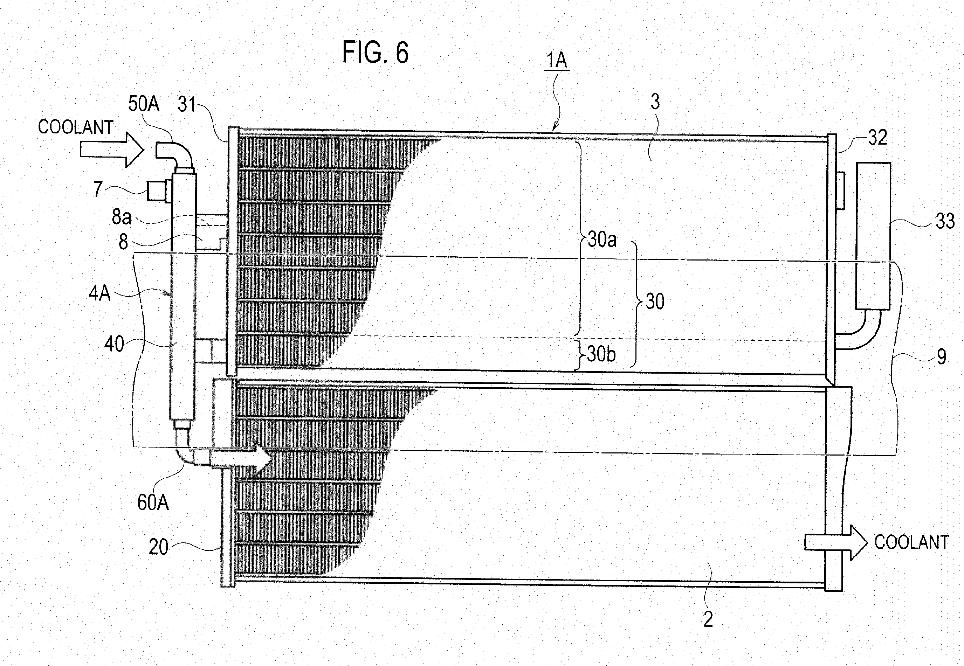

Note that, in the present embodiment, the coolant flows into the water-cooled condenser 4A from its lower end through the coolant flow-in pipe 5A, and flows out from the upper portion of the water-cooled condenser 4A through the coolant flow-out pipe 6A. However, a flow of the coolant is not limited to this, a flow of the coolant may be set reversely. Namely, as shown in Fig. 6, the coolant may flow into the upper portion of the water-cooled condenser 4A through a coolant flow-in pipe 50A provided at the upper end of the water-cooled condenser 4A, and may flow out from the lower end of the water-cooled condenser 4A through a flexible coolant flow-out pipe 60A provided at the lower end of the water-cooled condenser 4A. But, the configuration shown in Fig. 5 is preferred, because the coolant after being cooled by the sub-radiator 2 flows into the water-cooled condenser 4A.

In addition, when comparing the first embodiment (Fig. 1) and its modified example (Fig. 4) with the second embodiment (Fig. 5) and its modified example (Fig. 6), the first embodiment (Fig. 1) and its modified example (Fig. 4) are preferred because the subcooling section 30b of the air-cooled condenser 3 doesn't overlap the bumper reinforcement 9 and the subcooling section 30b functions sufficiently.

## Claims

1. A vehicle comprising:
a water-cooled condenser (4, 4A) that is provided with a refrigerant outlet port (8a), and exchanges heat between refrigerant of an air conditioner for the vehicle and coolant,
an air-cooled condenser (3) into which the refrigerant sent from the water-cooled condenser (4, 4A) flows through a refrigerant outlet port (8a); and
a bumper reinforcement (9) that is arranged in front of the air-cooled condenser (3) at a front section of the vehicle,
**characterized in that**
the refrigerant outlet port (8a) is connected with the air-cooled condenser (3) at a position that doesn't overlap the bumper reinforcement (9) when viewed along an airflow direction toward the air-cooled condenser (3).

2. The vehicle according to claim 1, wherein
the refrigerant outlet port (8a) is disposed closely beneath the bumper reinforcement (9).

3. The vehicle according to claim 1, wherein
the refrigerant outlet port (8a) is disposed closely above the bumper reinforcement (9).

4. The vehicle according to any one of claims 1 to 3, wherein
a sub-radiator (2) for exchanging heat between the coolant and outside air is provided above or under the air-cooled condenser (3), and the bumper reinforcement (9) is disposed so as to overlap a portion of the air-cooled condenser (3) and a portion of the sub-radiator (2).

5. The vehicle according to claim 4, wherein
a coolant inlet port to the sub-radiator (2) is disposed at a position that doesn't overlap the bumper reinforcement (2) when viewed along the airflow direction.

6. The vehicle according to claim 4 or 5, wherein
the water-cooled condenser (4, 4A) is disposed on one side of the sub-radiator (2) and the air-cooled condenser (3), and a liquid tank (33) for accumulating part of the refrigerant is disposed on another side of the air-cooled condenser (3).

## Patentansprüche

1. Fahrzeug, das umfasst:
einen wassergekühlten Kondensator (4, 4A), der mit einem Kältemittel-Auslassanschluss (8a) versehen ist und Wärme zwischen Kältemittel einer Klimaanlage für das Fahrzeug und Kühlmittel austauscht,
einen luftgekühlten Kondensator (30), in den das von dem wassergekühlten Kondensator (4, 4A) zugeführte Kältemittel über einen Kältemittel-Auslassanschluss (8a) einströmt; und
eine Stoßstangen-Verstärkung (9), die vor dem luftgekühlten Kondensator (3) an einem vorderen Teilabschnitt des Fahrzeugs angeordnet ist,
**dadurch gekennzeichnet, dass**
der Kältemittel-Auslassanschluss (8a) mit dem luftgekühlten Kondensator (3) an einer Position verbunden ist, die die Stoßstangen-Verstärkung (9), in Richtung eines Luftstroms auf den luftgekühlten Kondensator (3) zu gesehen, nicht überlappt.

2. Fahrzeug nach Anspruch 1, wobei
der Kältemittel-Auslassanschluss (8a) nahe unterhalb der Stoßstangen-Verstärkung (9) angeordnet ist.

3. Fahrzeug nach Anspruch 1, wobei der Kältemittel-Auslassanschluss (8a) nahe oberhalb
der Stoßstangen-Verstärkung (9) angeordnet ist.

4. Fahrzeug nach einem der Ansprüche 1 bis 3, wobei
ein Nebenkühler (20) zum Austauschen von Wärme zwischen dem Kühlmittel und Außenluft sich über oder unter dem luftgekühlten Kondensator (3) befindet und die Stoßstangen-Verstärkung (9) so angeordnet ist, dass sie einen Abschnitt des luftgekühlten Kondensators (3) und einen Abschnitt des Nebenkühlers (2) überlappt.

5. Fahrzeug nach Anspruch 4, wobei
ein Kühlmittel-Einlassanschluss in den Nebenkühler (2) an einer Position angeordnet ist, die die Stoßstangen-Verstärkung (2), in der Richtung des Luftstroms gesehen, nicht überlappt.

6. Fahrzeug nach Anspruch 4 oder 5, wobei
der wassergekühlte Kondensator (4, 4A) an einer Seite des Nebenkühlers (2) und des luftgekühlten Kondensators (3) angeordnet ist, und ein Flüssigkeitsbehälter (33) zum Sammeln eines Teils des Kältemittels an einer anderen Seite des luftgekühlten Kondensators (3) angeordnet ist.

## Revendications

1. Véhicule comprenant :
un condenseur refroidi par eau (4, 4A) qui est doté d'un orifice de sortie de réfrigérant (8a) et échange de la chaleur entre le réfrigérant d'une climatisation pour le véhicule et l'agent de refroidissement,
un condenseur refroidi par air (3) dans lequel le réfrigérant envoyé par le condenseur refroidi par eau (4, 4A) circule au travers d'un orifice de sortie de réfrigérant (8a), et
un dispositif de renforcement d'amortisseur (9) qui est agencé en avant du condenseur refroidi par air (3) au niveau de la section avant du véhicule,
**caractérisé en ce que**
l'orifice de sortie de réfrigérant (8a) est relié au condenseur refroidi par air (3) à une position qui ne chevauche pas le dispositif de renforcement d'amortisseur (9) lorsqu'il est vu le long de la direction du flux d'air se dirigeant vers le condenseur refroidi par air (3).

2. Véhicule selon la revendication 1, dans lequel :
l'orifice de sortie de réfrigérant (8a) est disposé immédiatement en dessous du dispositif de renforcement d'amortisseur (9).

3. Véhicule selon la revendication 1, dans lequel :
l'orifice de sortie de réfrigérant (8a) est disposé immédiatement au-dessus du dispositif de renforcement d'amortisseur (9).

4. Véhicule selon l'une quelconque des revendications 1 à 3, dans lequel :
un sous radiateur (2) destiné à échanger de la chaleur entre l'agent de refroidissement et l'air extérieur est prévu au-dessus ou en dessous du condenseur refroidi par air (3), et le dispositif de renforcement d'amortisseur (9) est placé de façon à chevaucher une partie du condenseur refroidi par air (3) et une partie du sous radiateur (2).

5. Véhicule selon la revendication 4, dans lequel :
un orifice d'entrée d'agent de refroidissement vers le sous radiateur (2) est disposé à une position qui ne chevauche pas le dispositif de renforcement d'amortisseur (9) lorsqu'il est vu le long de la direction du flux d'air.

6. Véhicule selon la revendication 4 ou la revendication 5, dans lequel :
le condenseur refroidi par eau (4, 4A) est disposé sur un côté du sous radiateur (2) et du condenseur refroidi par air (3), et un réservoir de liquide (33), destiné à accumuler une partie du réfrigérant, est disposé sur un autre côté du condenseur refroidi par air (3).
